# EUROPEAN PATENT APPLICATION

(11) **EP 4 679 584 A1**
(43) Date of publication of application: **14.01.2026**
(21) Application number: 24223610.7
(22) Date of filing: 30.12.2024
(51) Int. Cl.: H01M 50/152, H01M 50/342

(54) **CAP ASSEMBLY AND BATTERY**

(30) Priority: 11.07.2024 CN 202421649962 U
(71) Applicant: Eve Energy Co., Ltd., Huizhou, Guangdong 516006 (CN)
(72) Inventor: LI, Yiquan, Huizhou, Guangdong, 516006 (CN); LI, Jidong, Huizhou, Guangdong, 516006 (CN); SONG, Pengyuan, Huizhou, Guangdong, 516006 (CN); LIU, Ruili, Huizhou, Guangdong, 516006 (CN)
(74) Representative: Herrero & Asociados, S.L.

(57) **Abstract**

A cap assembly includes: a hole plate (120), defining at least one first vent hole (K1); an anti-explosion sheet (140); and an insulation gasket (130), disposed between the hole plate and the anti-explosion sheet and defining a center hole (K2). A portion of the anti-explosion sheet passes through the center hole and abuts against the hole plate, and a portion of the insulation gasket has an orthographic projection projected onto the hole plate, and the orthographic projection is located within the at least one first vent hole.

## Description

### TECHNICAL FIELD

Embodiments of the present disclosure relate to the technical field of batteries, and more specifically, to a cap assembly and a battery.

### BACKGROUND

In general, a cap assembly of a battery includes a top cap, an anti-explosion sheet, a hole plate, and an insulation gasket disposed between the anti-explosion sheet and the hole plate. In the art, an air vent hole in the hole plate and an air vent hole in the insulation gasket have a same shape and a same size. During testing safety performance of the battery, when the hole plate and the insulation gasket rotate or move relative to each other, the hole plate and the insulation gasket are shifted with respect to each other, and the hole plate may contact the anti-explosion sheet, such that a short circuit is formed, insulation between the hole plate and the anti-explosion sheet may be failed, and the safety performance of the battery is affected.

### SUMMARY

In a first aspect, the present disclosure provides a cap assembly, applied for a battery. The cap assembly includes: a hole plate, defining at least one first vent hole; an anti-explosion sheet; and an insulation gasket, disposed between the hole plate and the anti-explosion sheet and defining a center hole. A portion of the anti-explosion sheet passes through the center hole and abuts against the hole plate, and a portion of the insulation gasket has an orthographic projection projected onto the hole plate, and the orthographic projection is located within the at least one first vent hole.

In a second aspect, the present disclosure provides a battery, including: the cap assembly as described in the above; a housing; and a cell, arranged inside the housing. The cap assembly is assembled on the housing.

According to the present disclosure, at least part of the insulation gasket in the cap assembly has the orthographic projection on the hole plate located within the first vent hole. Since a portion of the anti-explosion sheet passes through the center hole to abut against the hole plate, a short circuit may be formed if the other portion of the anti-explosion sheet is connected to the hole plate. During testing the safety performance of the battery, at least part of the insulation gasket is isolated between the first vent hole of the hole plate and the anti-explosion sheet. In this way, a probability that the hole plate and the anti-explosion sheet are short-circuited due to contacting at a pressure relief position of the first vent hole, is reduced. For the cap assembly of the present disclosure, requirements for the insulation between the hole plate and the anti-explosion sheet are satisfied. In addition, since the at least part of the insulation gasket is isolated between the first vent hole of the hole plate and the anti-explosion sheet, a friction between the insulation gasket and the hole plate and a friction between the insulation gasket and the anti-explosion sheet are increased. In this way, rotation or translation of the insulation gasket, during testing the safety performance of the battery, is restricted, and the probability of the short circuit caused by contact between the hole plate and the anti-explosion sheet due to the movement of the insulation gasket, is reduced.

### BRIEF DESCRIPTION OF THE DRAWINGS

FIG. 1 is a cross-sectional view of a cap assembly according to an embodiment of the present disclosure.
FIG. 2 is a schematic view of an orthographic projection of an insulation gasket in the cap assembly projected onto a hole plate, according to an embodiment of the present disclosure.
FIG. 3 is a schematic view of the orthographic projection of the insulation gasket in the cap assembly projected onto the hole plate, according to another embodiment of the present disclosure.
FIG. 4 is a top view of the insulation gasket in the cap assembly according to an embodiment of the present disclosure.
FIG. 5 is a top view of the hole plate in the cap assembly according to an embodiment of the present disclosure.
FIG. 6 is a cross-sectional view of the cap assembly according to another embodiment of the present disclosure.
FIG. 7 is a schematic view of the orthographic projection of the insulation gasket in the cap assembly projected onto the hole plate, according to still another embodiment of the present disclosure.
FIG. 8 is an exploded view of a battery according to an embodiment of the present disclosure.

### Reference numerals in the drawings:

1000, battery; 100, cap assembly; 200, cell; 300, housing;
110, sealing ring; 120, hole plate; 130, insulation gasket; 140, anti-explosion sheet; 150, top cap;
K1, first vent hole; K2, center hole; K3, second vent hole;
A, welding region;
C, centerline; 131, first sub-portion; 132, second sub-portion;
141, body portion; 142, protruding portion; I, carved line.

### DETAILED DESCRIPTIONS

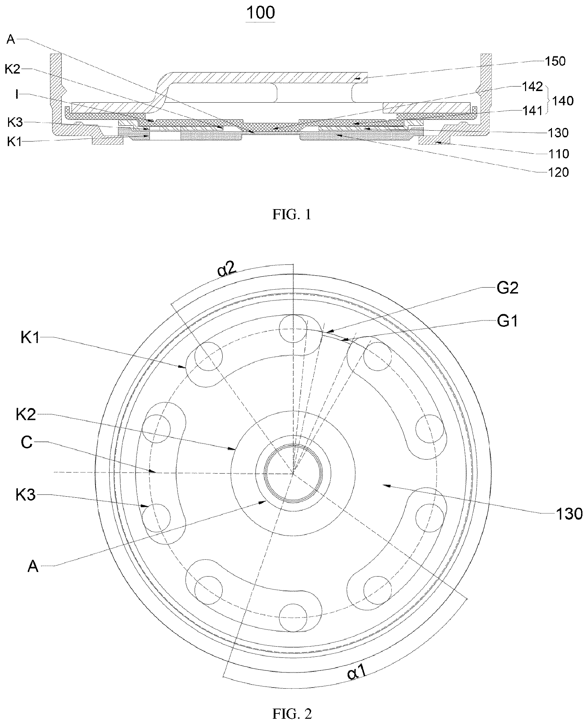

As shown in FIGS. 1 and 2, an embodiment of the present disclosure is described based on a cap assembly 100. The cap assembly 100 of the present embodiment is applied for a battery. As shown in FIG. 1, the cap assembly 100 includes a top cap 150, a sealing ring 110, an anti-explosion sheet 140, an insulation gasket 130, and a hole plate 120. A receiving space is defined in the sealing ring 110. The hole plate 120, the insulation gasket 130, and the anti-explosion sheet 140 are laminated, sequentially in a lower-upper direction, in the receiving space of the sealing ring 110. The top cap 150 is disposed at an end of the sealing ring 110 and is located at a side of the anti-explosion sheet 140 away from the hole plate 120. The anti-explosion sheet 140 is disposed at a side of the hole plate 120, and the insulation gasket 130 is disposed between the hole plate 120 and the anti-explosion sheet 140.

A side of the hole plate 120 near the anti-explosion sheet 140 is arranged with a welding region A configured to be welded with the anti-explosion sheet 140 to form an electrically conductive circuit. The anti-explosion sheet 140 includes a body portion 141 and a protruding portion 142. The protruding portion 142 is disposed on a surface of the body portion 141 near the hole plate 120 and is configured to be welded with the hole plate 120. The insulation gasket 130 defines a center hole K2. The protruding portion 142 of the anti-explosion sheet 140 passes through the center hole K2 to abut against the welding region A of the hole plate 120 and is welded to the welding region A of the hole plate 120. A side of the anti-explosion sheet 140 away from the hole plate 120 is welded to the top cap 150. In an embodiment, the anti-explosion sheet 140 may be arranged with a welding portion on a side of the anti-explosion sheet 140 away from the hole plate 120 to be welded to the top cap 150.

The hole plate 120 further defines a first vent hole K1 extending through the hole plate 120 along an axial direction of the hole plate 120. The first vent hole K1 is defined for releasing a pressure to prevent the battery from being exploded. The first air vent hole K1 is located on an outer side of the welding region A. The insulation gasket 130 defines the center hole K2. The anti-explosion sheet 140 is connected to the hole plate 120 through the center hole K2.

As shown in FIG. 2, a portion of the insulation gasket 130 has an orthographic projection projected on the hole plate 120, and the orthographic projection is located within the first vent hole K1. That is, at least a portion of the insulation gasket 130 is located between the first vent hole K1 and the body portion 141 of the anti-explosion sheet 140.

Since the protruding portion 142 of the anti-explosion sheet 140 passes through the center hole K2 to abut against the hole plate 120, any further connection between another portion of the anti-explosion sheet 140 and the hole plate 120 may cause a short circuit. In the present embodiment, by arranging a portion of the insulation gasket 130 to have the orthographic projection projected onto the hole plate 120 located within the first vent hole K1, at least a portion of the insulation gasket 130 is disposed between the first vent hole K1 of the hole plate 120 and the body portion 141 of the anti-explosion sheet 140 during testing the safety performance of the battery. In this way, the probability that the hole plate 120 and the anti-explosion sheet 140 are short-circuited due to contact at a pressure relief point of the first vent hole K1, is reduced, and the cap assembly 100 of the present embodiment can meet insulation requirements for the hole plate 120 and the anti-explosion sheet 140. In addition, since at least a portion of the insulation gasket 130 is isolated between the first vent hole K1 of the hole plate 120 and the body portion 141 of the anti-explosion sheet 140, a friction between the insulation gasket 130 and the hole plate 120 and a friction between the insulation gasket 130 and the anti-explosion sheet 140 are increased. Therefore, rotation or translation of the insulation gasket 130, during testing the safety performance of the battery, is limited; and the probability of the short circuit between the hole plate 120 and the anti-explosion sheet 140 due to the movement of the insulation gasket 130, is reduced.

In the present embodiment, the insulation gasket 130 defines a second vent hole K3 extending through the insulation gasket 130 along an axial direction of the insulation gasket 130. The second vent hole K3 is located at a circumferential side of the center hole K2. An orthographic projection of the second air vent hole K3 onto the hole plate 120 is located within the first vent hole K1. The second vent hole K3 is communicated to the first vent hole K1. The orthographic projection of the second vent hole K3 on the hole plate 120 being located within the orthographic projection of the first vent hole K1 means that all edges of the second vent hole K3 are located within the first vent hole K1; or a portion of the edges of the second vent hole K3 coincides with edges of the first vent hole K1. An area of one second vent hole K3 is smaller than an area of one first vent hole K1.

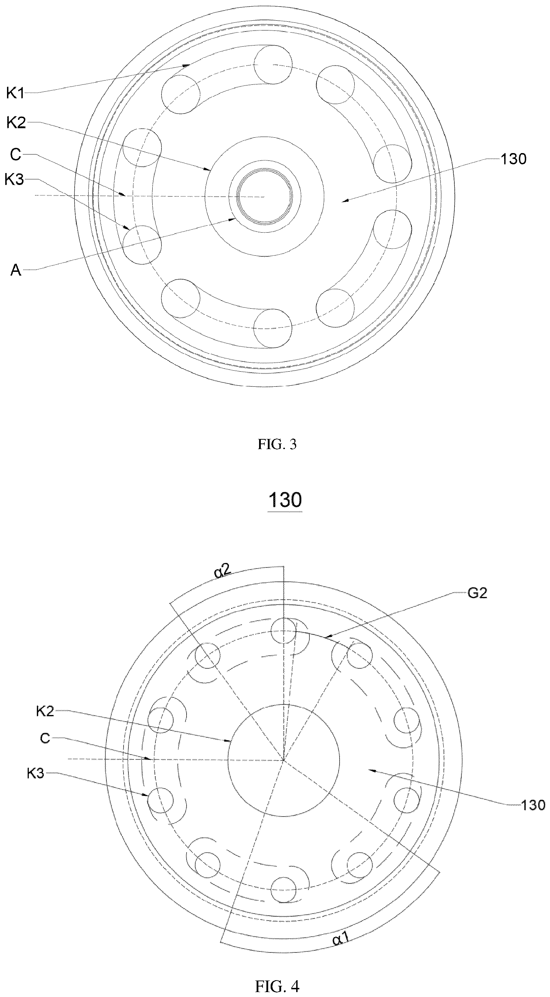

When orthographically projected onto the hole plate 120, a side edge of the second vent hole K3 may coincide with a side edge of the first vent hole K1, and a portion of the insulation gasket 130 has an edge that protrudes from the first vent hole K1 and does not coincide with the edges of the second vent hole K3. Alternatively, two side edges of the second vent hole K3 may respectively coincide with two side edges of the first vent hole K1, a portion of the insulation gasket 130 has an edge that protrudes from the first vent hole K1 and does not coincide with the edges of the second vent hole K3. As shown in FIG. 2, in the present embodiment, one side edge of the second vent hole K3 coincides with one side edge of the first vent hole K1, and other edges of the insulation gasket 130 protruding from the first vent hole K1 do not coincide with the edges of the second vent hole K3. As shown in FIG. 3, in some other embodiments, three side edges of the second vent hole K3 coincide with the edges of the first vent hole K1, and a portion of the insulation gaskets 130 protrudes from two edges of two opposite side walls of the first vent hole K1.

As shown in FIGS. 2, 4, and 5, the second vent hole K3 and the first vent hole K1 are communicated to each other to form an air vent channel. The second vent hole K3 is located in correspondence with and communicated to the first vent hole K1. An end of the first vent hole K1 is communicated to an internal cavity of the battery, and the other end of the first vent hole K1 is communicated to the second vent hole K3. When a pressure inside the battery is excessively high, gas inside the battery may be released through the first vent hole K1 and the second vent hole K3 to relieve the pressure and to prevent the battery from exploding.

In an embodiment, a surface of the anti-explosion sheet 140 away from the hole plate 120 is arranged with a carved line I. The carved line I is located within the orthographic projection of the second vent hole K3 on the anti-explosion sheet 140. The carved line I may be an annular groove. A thickness of the anti-explosion sheet 140 at the carved line I is reduced. The anti-explosion sheet 140 may be broken easily by the high-pressure gas to form a crack, such that the high-pressure gas is released. When the pressure inside the battery is excessively high, the high-pressure gas is released from the second vent hole K3. Arranging the carved line I at a position corresponding to the second vent hole K3 enables the anti-explosion sheet 140 to be more likely to be broken at the carved line I to form the crack.

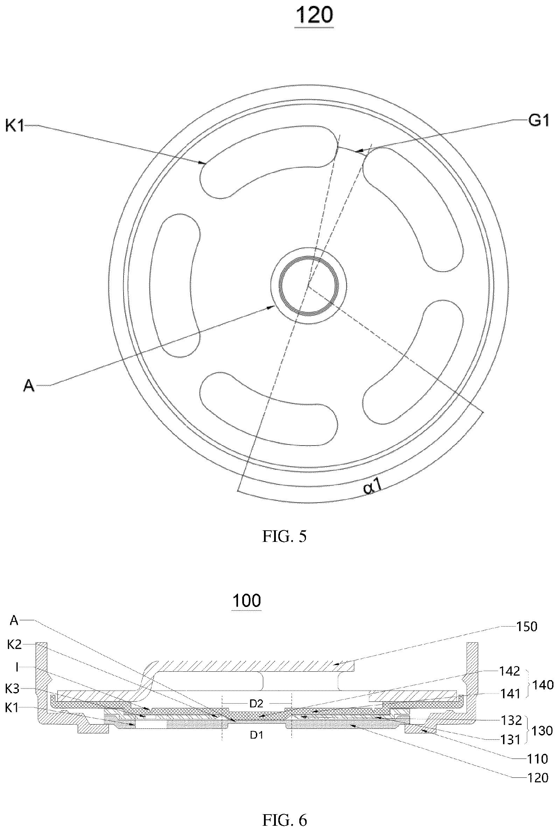

As shown in FIG. 5, a plurality of first vent holes K1 may be defined. The plurality of first vent holes K1 are rotationally symmetrically arranged about a center of the hole plate 120. That is, one of the plurality of first vent holes K1 can coincide, after being rotated by a certain angle around the center of the hole plate 120, with another one of the plurality of first vent holes K1. Correspondingly, a plurality of second vent holes K3 may be defined. The plurality of second vent holes K3 are rotationally symmetrically arranged about a center of the insulation gasket 130. In the present embodiment, each of the plurality of first vent holes K1 is arranged corresponding to two of the plurality of second vent holes K3. The number of the plurality of first vent holes K1 is 5, and correspondingly, the number of the plurality of second vent holes K3 is 10.

In an embodiment, the number of the plurality of first vent holes K1 may be four, and accordingly, the number of the plurality of second vent holes K3 on the insulation gasket 130 is eight. One of the four first vent holes K1 is arranged corresponding to two of the eight second vent holes K3.

In other embodiments, one of the plurality of first vent holes K1 may be arranged corresponding to one of the plurality of second vent holes K3; or one of the plurality of first vent holes K1 may be arranged corresponding to three of the plurality of second vent holes K3.

In an embodiment, a spacing G2 between two adjacent second vent holes of the plurality of second vent holes K3 is greater than a spacing G1 between two adjacent first vent holes of the plurality of first vent holes K1. As shown in FIG. 2, in the cap assembly 100, the spacing G1 between the two adjacent first vent holes K1 corresponds to the spacing G2 between the two adjacent second vent holes K3. A portion of the insulation gasket 130 disposed between the two adjacent second vent holes K3 has a side near the hole plate 120, and the side near the hole plate 120 is in contact with the corresponding spacing G1 between the two adjacent first vent holes K1, such that the friction is generated. When the insulation gasket 130 and the hole plate 120 are compressed to rotate or translate relative to each other, since the spacing G2 between the two adjacent second vent holes K3 is greater than the spacing G1 between the two adjacent first vent holes K1, the spacing G1 and the spacing G2 are still in contact with each other and have the friction therebetween, such that rotation and translation of the insulation gasket 130 is limited.

Moreover, the portion of the insulation gasket 130 between the two adjacent second vent holes K3 has a side near the anti-explosion sheet 140, and the side near the anti-explosion sheet 140 is in contact with the anti-explosion sheet 140, such that the friction therebetween is generated. As the spacing G2 between the two adjacent second vent holes K3 increases, the friction between the insulation gasket 130 and the anti-explosion sheet 140 increases, such that the movement of the insulation gasket 130 is limited.

In the present embodiment, the spacing G1 between the two adjacent first vent holes K1 is 1 millimeter (mm). The spacing G2 between the two adjacent second vent holes K3 is 2.2 mm.

As shown in FIGS. 2 and 4, in the present embodiment, one of the plurality of first vent holes K1 corresponds to two of the plurality of second vent holes K3. When being orthographically projected onto the hole plate, the two second vent holes K3 are respectively distributed on two sides of a centerline C of the one first vent hole K1 and are symmetrically arranged about the centerline C. When the pressure inside the battery is excessively high, the high-pressure gas is released from the second vent holes K3 on the two sides of the centerline C of the first vent hole K1. The two second vent holes K3 are symmetrically arranged about the centerline C of the first vent hole K1, and that is, the two second vent holes K3 are symmetrically arranged about a portion of the insulation gasket 130 located inside the first vent hole K1. The portion of the insulation gasket 130 located inside the first vent hole K1 is subjected to the pressure more uniformly, and the gas is released more evenly.

As shown in FIGS. 4 and 5, the plurality of second vent holes K3 are rotationally symmetrically arranged about the center of the insulation gasket 130. The plurality of first vent holes K1 are rotationally symmetrically arranged about the center of the hole plate 120. A rotation angle α2 of the two adjacent second vent holes K3 is 1/2 of a rotation angle α1 of the two adjacent first vent holes K1. In the present embodiment, the number of the plurality of first vent holes K1 is 5, and the rotation angle α1 of the two adjacent first vent holes K1 is 72°, such that the plurality of first vent holes K1 can be spaced apart from each other and can be distributed to have a uniform spaced interval on the hole plate 120. Correspondingly, the two adjacent second vent holes K3 on the insulation gasket 130 have the rotation angle α2 of 36°, such that the plurality of second vent holes K3 can be spaced apart from each other and can be distributed to have a uniform spaced interval on the insulation gasket 130, such that the pressure can be released more uniformly.

In other embodiments, the number of the plurality of first vent holes K1 is four, and the rotation angle α1 of the two adjacent air vent holes K1 is 90°. Accordingly, the rotation angle α2 of the two adjacent second vent holes K3 on the insulation gasket 130 is 45°.

When being orthographically projected onto the hole plate 120, a ratio of an area of the portion of the insulation gasket 130 located within the one first air vent K1 to an area of the one first air vent K1 is in a range of 1:5 to 3:5, such as 1:5, 1.25:5, 1.5:5, 2:5, 2.5:5, or 3:5, and the like. Accordingly, when being orthographically projected onto the hole plate 120, a ratio of a total area of all second vent holes K3 located within the one first vent hole K1 to the area of the one first vent hole K1 is in a range of 2:5 to 4:5. That is, the ratio of the total area of all second vent holes K3 corresponding to the one first vent hole K1 to the area of the one first vent hole K1 is in the range of 2:5 to 4:5, such as 4:5, 3.75:5, 3.5:5, 3:5, 2.5:5 or 2:5, and so on. In the present embodiment, when being orthographically projected onto the hole plate 120, the ratio of the area of the portion of the insulation gasket 130 located within the one first vent hole K1 to the area of the one first vent hole K1 is 2:5; and the ratio of the total area of all second vent holes K3 corresponding to the one first vent hole K1 to the area of the one first vent hole K1 is 3:5. When being orthographically projected onto the hole plate 120, when the area of the portion of the insulation gasket 130 located within the one first vent hole K1 is excessively large, a speed of releasing the gas out of the battery is excessively slow, and an anti-explosion effect is weak. When the area of the second vent holes K3 is excessively large, an area of the portion of the insulation gasket 130 protruding from the first vent hole K1 is excessively small, an insulation effect between a hole wall of the first vent hole K1 of the hole plate 120 and the anti-explosion sheet 140 is reduced. When being orthographically projected onto the hole plate 120, and when the ratio of the area of the portion of the insulation gasket 130 located within the one first vent hole K1 to the area of the one first vent hole K1 is in the range of 1:5 to 3:5, an insulation area between the hole plate 120 and the anti-explosion sheet 140 is increased, and it is ensured the pressure can be relieved smoothly.

In the present embodiment, each second vent hole K3 is a circular hole having a diameter of 1 mm. A distance from a circular center of the second vent hole K3 to the center of the insulation gasket 130 is 5.15 mm. Each first vent hole K1 is an elongated-round hole having an inner radius of 4.2 mm and an outer radius of 5.65 mm. A short axis of the first air vent K1 is 1.45 mm, and a long axis of the first air vent K1 is in a range of 5mm to 5.2 mm.

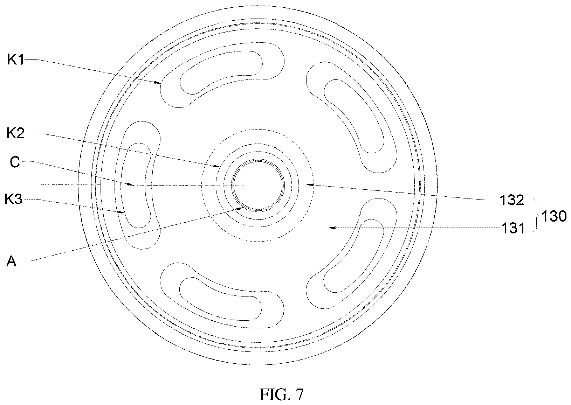

As shown in FIGS. 6 and 7, a structure of the cap assembly in the present embodiment is substantially the same as that of the other embodiments of the present disclosure. A specific structure of the insulation gasket 130, the number of the plurality of second vent holes K3, a shape of each second vent hole K3, and positions of the plurality of second vent holes K3 in the present embodiment are different from those in the other embodiments.

As shown in FIG. 6, the insulation gasket 130 includes a first sub-portion 131 and a second sub-portion 132 connected to the first sub-portion 131. The first sub-portion 131 surrounds and is disposed at an outside of the second sub-portion 132. The plurality of second vent holes K3 are located in the first sub-portion 131, and the center hole K2 is defined in the second sub-portion 132.

An inner diameter of the second sub-portion 132 increases along a direction in which the hole plate 120, the insulation gasket 130, and the anti-explosion sheet 140 are laminated. A maximum inner diameter D1 of the second sub-portion 132 is less than or equal to a maximum diameter D2 of the protruding portion 142. An inner wall of the second sub-portion 132 is a hole wall of the center hole K2, and that is, the inner diameter of the second sub-portion 132 is the diameter of the center hole K2. The diameter of the center hole K2 decreases gradually along the direction in which the hole plate 120, the insulation gasket 130, and the anti-explosion sheet 140 are laminated. The maximum diameter of the center hole K2 is greater than or equal to the maximum diameter D2 of the protruding portion 142. In the present disclosure, the diameter of the protruding portion 142 gradually increases along the direction in which the hole plate 120, the insulation gasket 130, and the anti-explosion sheet 140 are laminated.

In the present embodiment, the maximum inner diameter D1 of the second sub-portion 132 is equal to the maximum diameter D2 of the protruding portion 142. The maximum diameter of the center hole K2 is equal to the maximum diameter D2 of the protruding portion 142.

Along the direction in which the hole plate 120, the insulation gasket 130, and the anti-explosion sheet 140 are laminated, the inner diameter of the second sub-portion 132 gradually increases. The second sub-portion 132 may insulate the body portion 141 of the hole plate 120 from the anti-explosion sheet 140 at a position around the protruding portion 142 to increase an insulation area. Since the inner diameter of the second sub-portion 132 gradually increases, a gap is defined between the second sub-portion 132 and the hole plate 120. Even when the second sub-portion 132 deforms within the gap, an insulation effect can still be achieved. In addition, due to a limited length, the second sub-portion 132 does not interfere with the protruding portion 142, such that connection between the protruding portion 142 and the welding region A of the hole plate 120 is not affected.

As shown in FIG. 7, one first vent hole K1 corresponds to one second vent hole K3. A shape of the first vent hole K1 is the same as a shape of the second vent hole K3, and the first vent hole K1 is coaxially arranged with the second vent hole K3. In this way, the high-pressure gas, after passing through the first vent hole K1, can pass through the second vent hole K3 smoothly. In the present embodiment, each of the first vent hole K1 and the second vent hole K3 is an elongated-round hole. In other embodiments, each of the first vent hole K1 and the second vent hole K3 is a round hole or an elliptical hole. An inner diameter of the second vent hole K3 is smaller than an inner diameter of the first vent hole K1. Four side hole walls of the first vent hole K1 are isolated from the anti-explosion sheet 140 by the insulation gasket 130, such that the possibility of a short circuit caused by the hole walls of the first vent hole K1 contacting the anti-explosion sheet 140 is reduced. A distance from the hole wall of the second vent hole K3 to the hole wall of the first vent hole K1 is greater than or equal to 0.2 mm. Even when the hole plate 120 and the insulation gasket 130 move relative to each other by 0.2 mm, the insulation gasket 130 is still arranged to insulate the hole plate 120 from the anti-explosion sheet 140 at the first vent hole K1, the possibility of the short circuit caused by the hole plate 120 contacting the anti-explosion sheet 140 is reduced.

In the present embodiment, when being orthographically projected onto the hole plate 120, the ratio of the area of the portion of the insulation gasket 130 located within the one first vent hole K1 to the area of the one first vent hole K1 is in a range of 1:5 to 3:5. In the present embodiment, the distance from the hole wall of the second In an embodiment, the distance from the hole wall of the second vent hole K3 to the hole wall of the first vent hole K1 is 0.2mm, 0.3mm, 0.4mm, 0.5mm, 0.6mm, 0.7mm, 0.8mm, 0.9mm, or 1mm and the like . vent hole K3 to the hole wall of the first vent hole K1 is in a range of 0.2 mm to 1 mm. The distance can be determined according to sizes of the first vent hole K1 and the second vent hole K3.

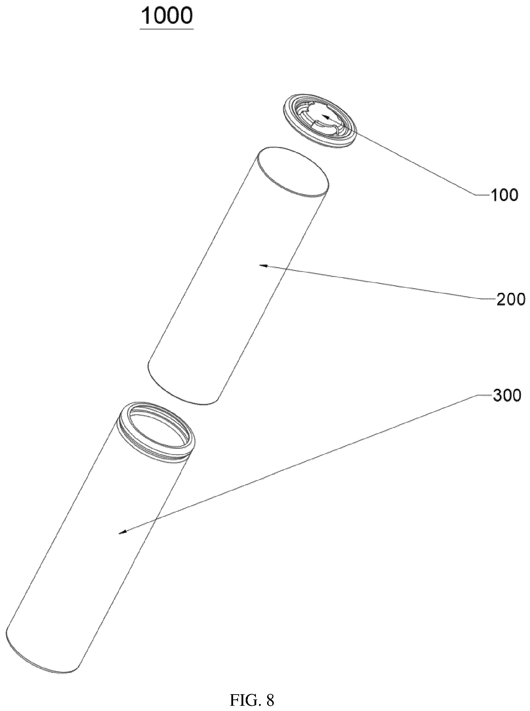

As shown in FIG. 8, the embodiments of the present disclosure provide a battery 1000. The battery 1000 includes the cap assembly 100 according to the embodiments of the present disclosure. The cap assembly 100 includes a housing 300 and a cell 200 arranged inside the housing 300. The cap assembly 100 is assembled on the housing 300. Since a portion of the insulation gasket 130 is disposed to isolate the pressure relief position of the plate plate 120 and the anti-explosion sheet 140, the probability of the short circuit, during testing the safety performance of the battery 1000, caused by the hole plate 120 contacting the anti-explosion sheet 140 is reduced. The hole plate 120 and the anti-explosion sheet 140 are prevented from being short circuited due to connection at the pressure relief position. The battery 1000 of the present disclosure satisfies the insulation requirements for the holes plate 120 and the anti-explosion sheet 140.

The above is a description of the cap assembly 100 and the battery 1000 provided by embodiments of the present disclosure.

According to the present disclosure, at least part of the insulation gasket in the cap assembly has the orthographic projection on the hole plate located within the first vent hole. Since a portion of the anti-explosion sheet passes through the center hole to abut against the hole plate, a short circuit may be formed if the other portion of the anti-explosion sheet is connected to the hole plate. During testing the safety performance of the battery, at least part of the insulation gasket is isolated between the first vent hole of the hole plate and the anti-explosion sheet. In this way, a probability that the hole plate and the anti-explosion sheet are short-circuited due to contacting at a pressure relief position of the first vent hole, is reduced. For the cap assembly of the present disclosure, requirements for the insulation between the hole plate and the anti-explosion sheet are satisfied. In addition, since the at least part of the insulation gasket is isolated between the first vent hole of the hole plate and the anti-explosion sheet, a friction between the insulation gasket and the hole plate and a friction between the insulation gasket and the anti-explosion sheet are increased. In this way, rotation or translation of the insulation gasket, during testing the safety performance of the battery, is restricted, and the probability of the short circuit caused by contact between the hole plate and the anti-explosion sheet due to the movement of the insulation gasket, is reduced.

## Claims

1. A cap assembly, applied for a battery, wherein the cap assembly comprises:
a hole plate (120), defining at least one first vent hole (K1);
an anti-explosion sheet (140); and
an insulation gasket (130), disposed between the hole plate (120) and the anti-explosion sheet (140) and defining a center hole (K2);
wherein a portion of the anti-explosion sheet (140) passes through the center hole (K2) and abuts against the hole plate (120), and a portion of the insulation gasket (130) has an orthographic projection projected onto the hole plate (120), and the orthographic projection is located within the at least one first vent hole (K1).

2. The cap assembly according to claim 1, wherein the insulation gasket (130) defines at least one second vent hole (K3) extending through the insulation gasket (130) along an axial direction of the insulation gasket (130); the at least one second vent hole (K3) is located at a circumferential side of the center hole (K2); an orthographic projection of each of the at least one second air vent hole onto the hole plate (120) is located within a respective one of the at least one first vent hole (K1); each of the at least one second vent hole (K3) is communicated to the respective one of the at least one first vent hole (K1).

3. The cap assembly according to claim 2, wherein the at least one first vent hole (K1) comprises a plurality of first vent holes (K1); the plurality of first vent holes (K1) are rotationally symmetrically arranged about a center of the hole plate (120);
the at least one second vent hole (K3) comprises a plurality of second vent holes (K3); the plurality of second vent holes (K3) are rotationally symmetrically arranged about a center of the insulation gasket (130); a spacing between two adjacent second vent holes (K3) of the plurality of second vent holes (K3) is greater than a spacing between two adjacent first vent holes (K1) of the plurality of first vent holes (K1).

4. The cap assembly according to claim 2, wherein the at least one second vent hole (K3) comprises a plurality of second vent holes (K3); one of the at least one first vent hole (K1) is arranged corresponding to two second vent holes (K3) of the plurality of second vent holes (K3); and when being orthographically projected onto the hole plate (120), the two second vent holes (K3) are respectively distributed on two sides of a centerline of the one first vent hole (K1) and are symmetrically arranged about the centerline.

5. The cap assembly according to claim 4, wherein the at least one second vent hole (K3) comprises a plurality of second vent holes (K3), the plurality of second vent holes (K3) are rotationally symmetrically arranged about a center of the insulation gasket (130);
the at least one first vent hole (K1) comprises a plurality of first vent holes (K1); the plurality of first vent holes (K1) are rotationally symmetrically arranged about a center of the hole plate (120);
a rotation angle of two adjacent second vent holes (K3) of the plurality of second vent holes (K3) is 1/2 of a rotation angle of two adjacent first vent holes (K1) of the plurality of first vent holes (K1).

6. The cap assembly according to any one of claims 2 to 5, wherein each of the at least one first vent hole (K1) corresponds to one respective second vent hole (K3) of the at least one second vent hole (K3); a shape of each of the at least one first vent hole (K1) is the same as a shape of each of the at least one second vent hole (K3), and each of the at least one first vent hole (K1) is coaxially arranged with the one respective second vent hole (K3) of the at least one second vent hole (K3); an inner diameter of each of the at least one second vent hole (K3) is smaller than an inner diameter of each of the at least one first vent hole (K1).

7. The cap assembly according to any one of claims 1 to 6, wherein, when being orthographically projected onto the hole plate (120), at least one of the at least one second vent hole (K3) are projected within one first vent hole (K1) of the at least one first vent hole (K1); a ratio of a total area of the at least one second vent hole (K3) located within the one first vent hole (K1) to an area of the one first vent hole (K1) is in a range of 2:5 to 4:5.

8. The cap assembly according to any one of claims 2 to 7, wherein, at least one of the at least one second vent hole (K3) corresponds to one first vent hole (K1) of the at least one first vent hole (K1); a distance from a hole wall of the corresponding at least one second vent hole (K3) to a hole wall of the one first vent hole (K1) is greater than or equal to 0.2 mm.

9. The cap assembly according to any one of claims 2 to 8, wherein, a surface of the anti-explosion sheet (140) away from the hole plate (120) is arranged with a carved line (I); the carved line (I) is located within the orthographic projection of the at least one second vent hole (K3) on the anti-explosion sheet (140).

10. The cap assembly according to any one of claims 1 to 9, wherein, the anti-explosion sheet (140) comprises a body portion (141) and a protruding portion (142); the protruding portion (142) is disposed on a surface of the body portion (141) near the hole plate (120); the protruding portion (142) passes through the center hole (K2) to abut against the hole plate (120);
the insulation gasket (130) comprises a first sub-portion (131) and a second sub-portion (132) connected to the first sub-portion (131); the first sub-portion (131) surrounds and is disposed at an outside of the second sub-portion (132); the at least one second vent hole (K3) is defined in the first sub-portion (131); the center hole (K2) is defined in the second sub-portion (132); and
an inner diameter of the second sub-portion (132) increases along a direction in which the hole plate (120), the insulation gasket (130), and the anti-explosion sheet (140) are laminated; a maximum inner diameter of the second sub-portion (132) is less than or equal to a maximum diameter of the protruding portion (142).

11. The cap assembly according to claim 10, wherein a side of the hole plate (120) near the anti-explosion sheet (140) is arranged with a welding region (A) configured to be welded with the anti-explosion sheet (140) to form an electrically conductive circuit.

12. The cap assembly according to claim 11, wherein the protruding portion (142) of the anti-explosion sheet (140) passes through the center hole (K2) to abut against the welding region (A) of the hole plate (120) and is welded to the welding region (A) of the hole plate (120).

13. The cap assembly according to any one of claims 10 to 12, wherein the portion of the insulation gasket (130) is disposed between the at least one first vent hole (K1) and the body portion (141) of the anti-explosion sheet (140).

14. The cap assembly according to any one of claims 2 to 13, wherein all edges of the at least one second vent hole (K3) are located within the at least one first vent hole (K1); or a portion of all edges of the at least one second vent hole (K3) coincides with edges of the at least one first vent hole (K1); and
an area of each of the at least one second vent hole (K3) is smaller than an area of a respective one of the at least one first vent hole (K1).

15. A battery, comprising:
the cap assembly (100) according to any one of claims 1 to 14;
a housing (300); and
a cell (200), arranged inside the housing;
wherein the cap assembly (100) is assembled on the housing.
